# EUROPEAN PATENT APPLICATION

(11) **EP 1 895 145 A2**
(43) Date of publication of application: **05.03.2008**
(21) Application number: 07016798.6
(22) Date of filing: 28.08.2007
(51) Int. Cl.: F02M 25/08, F02M 37/00

(54) **Sealed fuel tank evaporative emissions control system for small internal combustion engines**

(30) Priority: 31.08.2006 US 824082 P; 29.06.2007 US 770820
(71) Applicant: TECUMSEH PRODUCTS COMPANY, Tecumseh Michigan 49286 (US)
(72) Inventor: Donahue, Ronald J., Fond du Lac Wisconsin 54935 (US); Schleicher, Barry P., Hilbert Wisconsin 54129 (US)
(74) Representative: Weitzel, Wolfgang

(57) **Abstract**

An evaporative emissions control system (40) for small internal combustion engines (28). The fuel tank (30) of the engine includes a filler neck (74) closed by a fuel tank cap (32) which seals the fuel tank in a manner in which air and/or fuel vapors are not permitted to pass between the filler neck and the fuel tank cap. The fuel tank cap includes a first, one-way vacuum relief valve (88) therein which operates to allow atmospheric make-up air to enter the fuel tank to replace a decreasing amount of fuel in the fuel tank during running of the engine, or otherwise as needed. The fuel tank cap additionally includes a second, one-way pressure relief valve (90) having a first cracking threshold which operates to relieve high pressures within the fuel tank. Additionally, the fuel supply line (80) between the fuel tank and the carburetor (42) includes a fuel flow blocking or inhibiting member (130, 160, 63) having a second cracking threshold greater than the first cracking threshold of the pressure relief valve of the fuel tank cap. In operation, fuel vapors are sealed within the fuel tank at all times when the fuel tank cap is closed to prevent fuel vapors from escaping into the atmosphere, and the fuel flow blocking member prevents flooding of the carburetor with liquid fuel if the fuel vapors within the fuel tank build to a high pressure prior to cracking of the pressure relief valve of the fuel tank cap. When the fuel tank cap is removed, a vapor vent valve in communication with the vapor dome of the fuel tank is opened, allowing vapor pressure to be relieved prior to disengagement of the fuel tank cap from the filler neck.

## Description

### Cross-reference to related applications

This application claims the benefit under Title 35, U.S.C. §119(e) of U.S. Provisional Patent Application Serial No. 60/824,082, entitled SEALED FUEL TANK EVAPORATIVE EMISSIONS CONTROL SYSTEM FOR SMALL INTERNAL COMBUSTION ENGINES, filed on August 31, 2006, the disclosure of which is expressly incorporated herein by reference.

### BACKGROUND OF THE INVENTION

### 1. Field of the Invention.

The present invention relates to small internal combustion engines of the type used with lawnmowers, lawn tractors, and other utility implements. In particular, the present invention relates to an emissions control system for such engines.

### 2. Description of the Related Art.

Small internal combustion engines of the type used with lawnmowers, lawn tractors, and other small utility implements typically have an intake system including a carburetor or fuel injector attached to the engine which mixes liquid fuel with atmospheric air to form a fuel/air mixture which is drawn into the engine for combustion.

One known type of carburetor includes a fuel bowl containing a supply of liquid fuel which is drawn into the throat of the carburetor to mix with atmospheric air during running of the engine. A float within the fuel bowl actuates a valve which meters liquid fuel into the fuel bowl from a fuel tank. In another known type of carburetor, a diaphragm pump attached to the crankcase of the engine is actuated by pressure pulses within the engine to pump fuel from a fuel tank into a fuel chamber within the carburetor, from which the fuel is drawn into the throat of the carburetor to mix with atmospheric air.

In each of the foregoing arrangements, the carburetor is attached via a fuel line to a fuel tank, which stores a quantity of liquid fuel. The fuel tank includes a filler neck through which fuel may be filled into the fuel tank, and a fuel tank cap is attached to the filler neck to close the fuel tank. The fuel tank cap usually includes a venting structure for allowing any pressurized fuel vapors within the fuel tank to vent through the fuel tank cap to the atmosphere. Also, the venting structure allows atmospheric air to enter the fuel tank from the atmosphere as necessary to occupy the expanding volume within the fuel tank which is created as the fuel within the fuel tank is consumed by the engine.

Of concern with existing intake and fuel supply systems of such small internal combustion engines is that fuel vapors may escape from the fuel supply systems to the atmosphere, such as from the carburetor or from the fuel tank. For example, in a float bowl type of carburetor, fuel vapors may escape to the atmosphere via the internal venting structure of the carburetor which connects the air space of the fuel bowl with the carburetor throat, or through the fuel circuit of the carburetor. Also, fuel vapors in the fuel tank may escape to the atmosphere through the venting structure in the fuel tank cap.

What is needed is a fuel supply system for small internal combustion engines which prevents the escape of fuel vapors to the atmosphere, thereby controlling and/or substantially eliminating fuel vapor emissions from such engines.

### SUMMARY OF THE INVENTION

The present invention provides an evaporative emissions control system for small internal combustion engines. The fuel tank of the engine includes a filler neck closed by a fuel tank cap which seals the fuel tank in a manner in which air and/or fuel vapors are not permitted to pass between the filler neck and the fuel tank cap. The fuel tank cap includes a first, one-way vacuum relief valve therein which operates to allow atmospheric make-up air to enter the fuel tank to replace a decreasing amount of fuel in the fuel tank during running of the engine, or otherwise as needed. The fuel tank cap additionally includes a second, one-way pressure relief valve having a first cracking threshold which operates to relieve high pressures within the fuel tank. Additionally, the fuel supply line between the fuel tank and a fuel supply device, such as a carburetor or fuel injector, includes a fuel flow inhibiting or blocking member having a second cracking threshold greater than the first cracking threshold of the pressure relief valve of the fuel tank cap. In operation, fuel vapors are sealed within the fuel tank at all times when the fuel tank cap is closed to prevent fuel vapors from escaping into the atmosphere, and the fuel flow blocking member prevents flooding of the fuel supply device with liquid fuel if the fuel vapors within the fuel tank build to a high pressure prior to cracking of the pressure relief valve of the fuel tank cap.

In one embodiment, the fuel flow inhibiting member in the fuel line between the fuel tank and the fuel supply device may be a valve movable between an open position and a closed position responsive to pressure changes within the fuel supply device or engine. In particular, the valve may be a vacuum-operated valve including a vacuum line connected to the intake system of the engine, wherein the valve is normally closed when the engine is not running. When the engine is running, the valve opens via vacuum from the intake system of the engine to allow fuel flow from the fuel tank to the fuel supply device.

In another embodiment, the fuel flow inhibiting member in the fuel line between the fuel tank and the fuel supply device may be a fuel pump operable during running of the engine to pump fuel from the fuel tank to the fuel supply device. During engine shutdown, the fuel pump is not operable, and blocks fuel flow from the fuel tank to the fuel supply device. The fuel pump may be a crankcase pressure actuated, diaphragm-type fuel pump, for example.

Advantageously, the present system eliminates the need for a vapor control device, such as a charcoal canister, to trap fuel vapors from the fuel tank and/or fuel bowl of the carburetor, as well as the vent lines, rollover valves, etc., that are typically associated with such devices, thereby simplifying the overall construction and cost of the present system. In this manner, the present system includes a minimal number of overall components and does not require any action on the part of the operator of the engine for the system to function.

In a further embodiment, the fuel tank cap may additionally include a vapor vent valve which is operable upon initial rotation of the fuel tank cap by an operator to vent fuel vapors from the vapor dome of the fuel tank prior to removal of the fuel tank cap, thereby aiding in holding liquid fuel within, or preventing loss of liquid fuel from, the fuel tank when the fuel tank cap is removed. The fuel tank cap may be connected to the vapor dome of the fuel tank via a conduit which also functions to tether the fuel tank cap to the fuel tank when the fuel tank cap is removed from the fuel tank.

In one form thereof, the present invention provides an internal combustion engine, including a fuel supply device; a fuel tank, including a fuel tank body; a filler neck; a fuel tank cap sealingly attached to the filler neck; and an internal pressure relief valve having a first cracking threshold; and a fuel line fluidly communicating the fuel tank and the fuel supply device, the fuel line including a fuel flow blocking member between the fuel tank and the fuel supply device, the fuel flow blocking member movable between a first, open position during running of the engine and a second, closed position when the engine is not running, the fuel flow blocking member having, in the second, closed position, a second cracking threshold greater than the first cracking threshold of the internal pressure relief valve.

In another form thereof, the present invention provides an internal combustion engine, including a fuel tank, including a fuel tank body; a filler neck having a first portion external of the fuel tank and a second portion internal to the fuel tank with a fuel fill passage defined through the first and second portions, the second portion projecting into the fuel tank volume to define a vapor dome in an upper portion of the fuel tank; a fuel tank cap securable to the fist portion of the filler neck, the fuel tank cap including a vapor vent valve; and a connecting passage fluidly connecting the vapor dome and the vapor vent valve of the fuel tank cap, wherein when the fuel tank contains a liquid fuel level proximate the second portion of the filler neck, opening the fuel tank cap vents fuel vapors initially from the vapor dome through the connecting passage and the vapor vent valve, and thence from the fuel fill passage through the filler neck.

In another form thereof, the present invention provides an internal combustion engine, including a fuel tank, including a fuel tank body; a filler neck having a first portion external of the fuel tank and a second portion internal to the fuel tank with a fuel fill passage defined through the first and second portions, the second portion projecting into the fuel tank volume to define a vapor dome in an upper portion of the fuel tank; a fuel tank cap securable to the fist portion of the filler neck; and a connecting passage fluidly connecting the vapor dome and the fuel fill passage, wherein when the fuel tank contains a liquid fuel level proximate the second portion of the filler neck, opening the fuel tank cap vents fuel vapors concurrently from the fuel fill passage and from the vapor dome through the connecting passage.

### BRIEF DESCRIPTION OF THE DRAWINGS

The above-mentioned and other features and advantages of this invention, and the manner of attaining them, will become more apparent and the invention itself will be better understood by reference to the following description of embodiments of the invention taken in conjunction with the accompanying drawings, wherein:

Fig. 1 is a perspective view of an exemplary implement, shown as a lawnmower, which includes an internal combustion engine having an evaporative emissions control system in accordance with the present invention;

Fig. 2A is a schematic representation of the evaporative emissions control system, showing the fuel tank, carburetor, and the fuel flow blocking member, as well as the fuel tank cap with vacuum and pressure relief valves;

Fig. 2B is a schematic representation of an alternate evaporative emissions control system, showing the fuel tank, fuel injector, and the fuel flow blocking member, as well as the fuel tank cap with vacuum and pressure relief valves;

Fig. 3 is a fragmentary view of a portion of the fuel tank of Fig. 2, showing the details of the construction of the vacuum and pressure relief valves of the fuel tank cap;

Fig. 4 is a fragmentary view of a first embodiment of the fuel flow blocking member of Fig. 2, shown as a vacuum-actuated valve;

Fig. 5 is a fragmentary view of the first embodiment of the fuel flow blocking member of Fig. 2, shown as a mechanically-actuated valve;

Fig. 6 is a fragmentary view of a second embodiment of the fuel flow blocking member of Fig. 2, shown as a fuel pump;

Fig. 7 is a schematic representation of an evaporative emissions control system according to another embodiment;

Fig. 8 is a fragmentary view of a portion of the fuel tank of the system of Fig. 7;

Fig. 9 is a fragmentary view of a portion of the fuel tank cap of the system of Fig. 7; and

Fig. 10 is an exploded view of a fuel tank cap including a vapor vent valve.

Corresponding reference characters indicate corresponding parts throughout the several views. The exemplifications set out herein illustrate embodiments of the invention, and such exemplifications are not to be construed as limiting the scope of the invention any manner.

### DETAILED DESCRIPTION

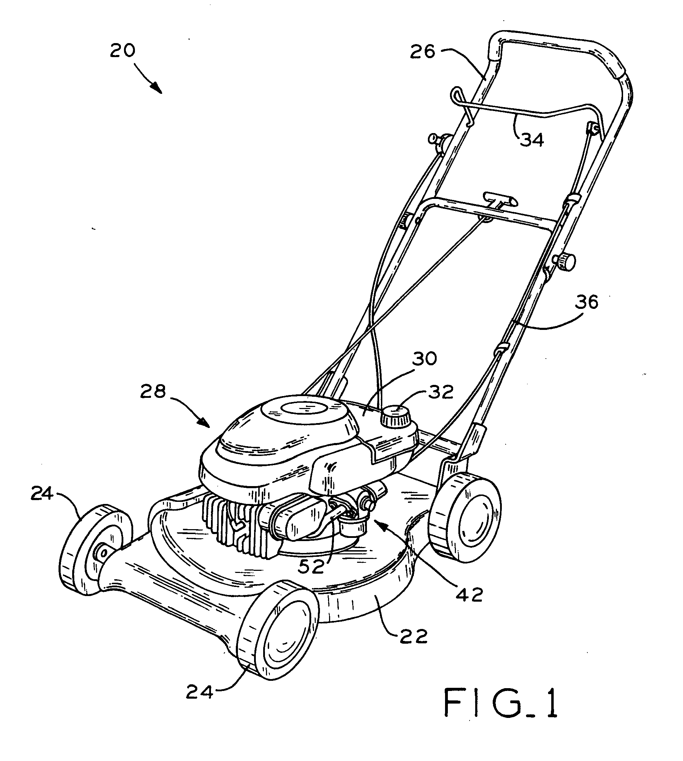

Referring first to Fig. 1, lawnmower 20 is shown as an example of an implement with which a small internal combustion engine may be used, the engine including an evaporative emissions control system in accordance with the present invention. Lawnmower 20 generally includes deck 22 having wheels 24, and a user-operable handle 26 extending upwardly from deck 22. A small internal combustion engine 28 is mounted to deck 22. Engine 28 is shown herein as a vertical crankshaft engine which drives a cutting blade (not shown) disposed beneath deck 22. However, the evaporative emissions control systems of the present invention are equally applicable to horizontal crankshaft engines, as well as engines having one, two, or multiple cylinders of the type commonly used with a variety of different types of implements, including lawnmowers, lawn and garden tractors, snow throwers, compressors, generators, and the like.

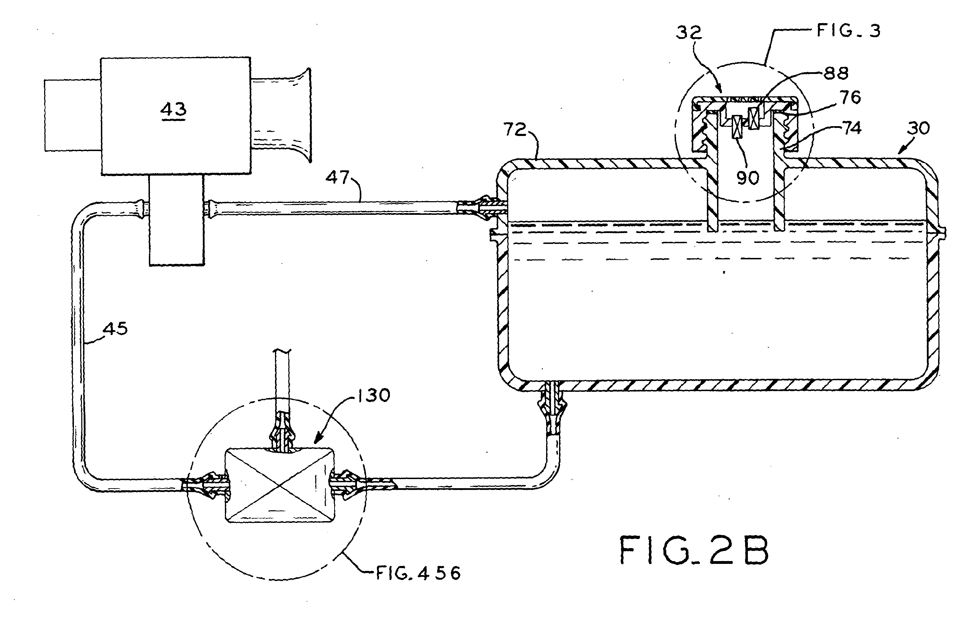

Engine 28 includes fuel tank 30 storing liquid fuel, with the fill inlet of fuel tank 30 closed by fuel tank cap 32. Fuel tank 30 supplies liquid fuel to a fuel supply device, such as a carburetor or fuel injector of engine 28, discussed below, which mixes the fuel with intake air to provide a fuel/air combustion mixture for engine 28, or which atomizes the fuel under pressure into the combustion chamber(s) of engine 28, respectively. The carburetor 42 of engine 28 may be a fuel bowl-type carburetor as shown herein, or alternatively, may be a diaphragm carburetor, a piston-type carburetor, or a weir-type carburetor. Still further, rather than including a carburetor, engine 28 may include a fuel injector 43, as shown in Fig. 2B.

Also, handle 26 of lawnmower 20 includes a bail assembly 34 which is actuated by a user before, or contemporaneously with, the startup of engine 28. Typically, bail assembly 34 controls the ignition system of engine 28, and is also connected to a flywheel brake (not shown) via mechanical linkage including cable 36. When actuated by an operator, bail assembly 34 enables the ignition system of engine 28 and releases the flywheel brake to allow running of engine 28. Upon release of bail assembly 34 by the operator, the ignition system is grounded, and the flywheel brake is automatically engaged to quickly stop running of engine 28.

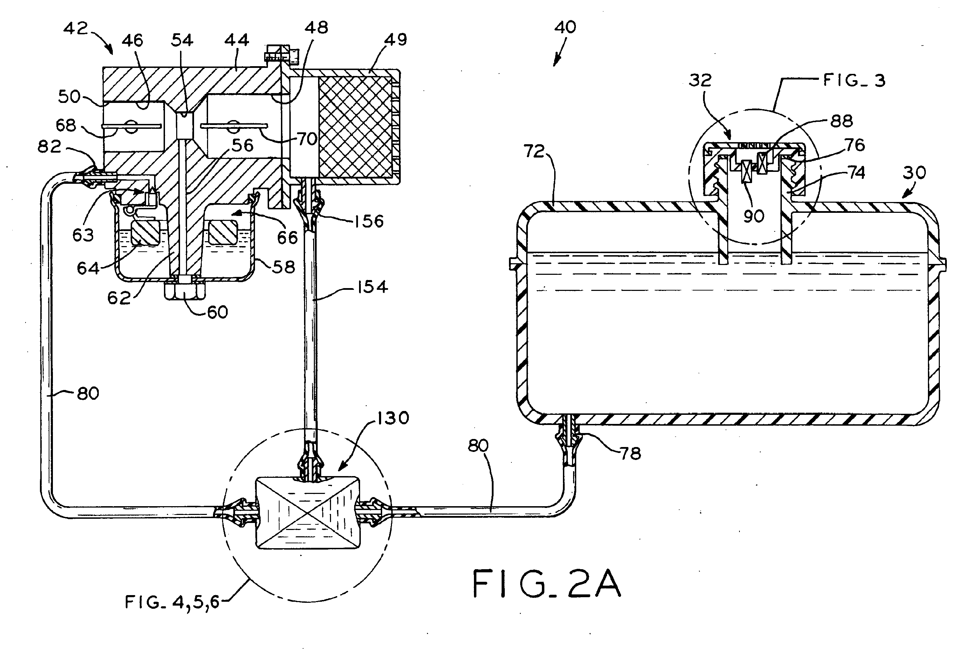

Referring to Fig. 2A, an evaporative emissions control system 40 of the present invention is shown, which includes a float bowl-type carburetor 42. Carburetor 42 generally includes carburetor body 44 having an air intake passage or throat 46 with inlet end 48 connected to an air filter 49, and outlet end 50 connected to the intake manifold 52 (Fig. 1) of engine 28. Throat 46 includes a constricted portion or venturi 54 proximate the nozzle of main fuel jet 56 through which liquid fuel is drawn from fuel bowl 58 of carburetor 42 into throat 46 for mixing with intake air in a known manner during running of engine 28. Fuel bowl 58 is connected to carburetor body 44 by a bowl nut 60 attached to stem portion 62 of carburetor 42. Fuel bowl 58 contains a volume of liquid fuel therein, and includes an inlet valve 63 actuated by float 64 for metering liquid fuel into fuel bowl 58 in a known manner from fuel tank 30 via a gravity feed or a pump feed, for example. Air space or head space 66 of fuel bowl 58 is disposed above the liquid fuel therein.

Throttle valve plate 68 is disposed within throat 46 of carburetor 42, and is rotatable to vary the amount of air/fuel mixture which is supplied to engine 28, and therefore to in turn vary the load and/or running speed of engine 28 in a known manner. Throttle valve plate 68 is controlled by an operator of engine 28 and/or by a governor (not shown) of engine 28 through a suitable linkage arrangement (not shown), for example. Choke valve plate 70 is also disposed within throat 46 of carburetor 42 upstream of throttle valve plate 68, and is controlled by the operator via mechanical linkage, for example, to rotate between a substantially closed position to aid in engine starting and an open position during engine running.

Fuel tank 30 generally includes fuel tank body 72 and filler neck 74 having external or internal threads. Fuel tank cap 32 includes internal or external threads for threaded attachment to filler neck 74 to close fuel tank 30. Gasket 76 is disposed within fuel tank cap 32 to provide a fluid tight seal between fuel tank cap 32 and filler neck 74 such that, when fuel tank cap 32 is attached to filler neck 74, air is prevented from entering fuel tank 30 from the atmosphere, and fuel vapors within fuel tank 30 are prevented from escaping fuel tank 30 to the atmosphere, except in the manner described below. Thus, fuel tank cap 32 is a sealing or "non-vented" cap, and differs from known fuel tank caps which include fuel tank venting arrangements. Fuel tank 30 stores a quantity of liquid fuel, which is supplied through fuel outlet 78 of fuel tank 30 and fuel supply line 80 to fuel inlet 82 of fuel bowl 58 of carburetor 42 by a gravity feed when feel tank 30 is disposed above fuel bowl 58, although this arrangement is not illustrated in Fig. 2A. Alternatively, a fuel pump, such as that described below, may be used to convey liquid fuel from fuel tank 30 to fuel bowl 58 during running of engine 28.

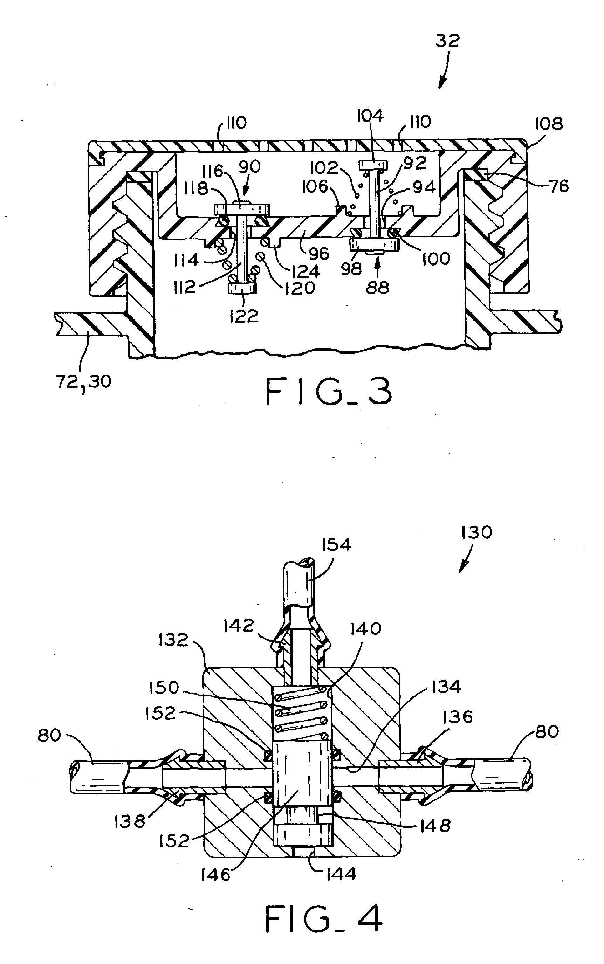

Referring additionally to Fig. 3, details of fuel tank cap 32 will be discussed. Fuel tank cap 32 includes a first, vacuum relief valve 88 and a second, pressure relief valve 90. As described below, vacuum relief valve 88 and pressure relief valve 90 may comprise two separate devices each integrated into fuel tank cap 32. Alternatively, vacuum relief valve 88 and pressure relief valve 90 may be together integrated as a single device which operates to carry out the vacuum relief and pressure relief functions. Fuel tank cap 32 may include a ratcheting structure of the type disclosed in U.S. Patent Application Publication No. 2006/0151056 for providing tactile and audible feedback to a user when fuel tank cap 32 is screwed onto filler neck 74 of fuel tank 30. The disclosure of U.S. Patent Application Publication No. 2006/0151056 is expressly incorporated herein by reference. Still further, vacuum relief valve 88 and pressure relief valve 90 may be formed as part of body 72 of fuel tank 30 separately from fuel tank cap 32.

Vacuum relief valve 88 includes valve stem 92 slidable within opening 94 in wall 96 of fuel tank cap 32. Valve head 98 is biased against O-ring seal 100 by spring 102 captured between valve flange 104 and spring seat 106 of wall 96. Fuel tank cap 32 may include a cover 108 having a plurality of apertures 110 in communication with the atmosphere, for example, or other suitable venting structure. When a vacuum exists within fuel tank 30, such as when fuel is consumed during running of engine 28 or when the fuel vapor pressure within fuel tank 30 decreases due to cooling of the fuel, for example, valve head 98 is temporarily shifted against the bias of spring 102 to allow atmospheric make-up air to enter fuel tank 30 via apertures 110 in cover 108 and opening 94 in wall 96. When the vacuum is relieved, spring 102 biases valve head 98 back to its closed position. Thus, vacuum relief valve 88 is operable as a one-way valve allowing atmospheric make-up air to pass therethrough responsive to vacuum within fuel tank 30 created by consumption of liquid fuel from fuel tank 30 during running of engine 28 or as otherwise may be required, such that the vapor space within fuel tank 30 is maintained at approximately atmospheric pressure.

Pressure relief valve 90 may be structured similarly to vacuum relief valve 88 as shown in Fig. 3, and includes valve stem 112 slidable within opening 114 in wall 96 of fuel tank cap 32. Valve head 116 is biased against O-ring seal 118 by spring 120 captured between valve flange 122 and spring seat 124 of wall 96. Spring 120 of pressure relief valve 90 is stronger than spring 102 of vacuum relief valve 88 such that vacuum relief valve 88 opens more readily than pressure relief valve 90 for the reasons discussed below. When an undesirably high pressure exists within fuel tank 30, valve head 114 is temporarily shifted against the bias of spring 118 to allow internal pressure within fuel tank 30 to vent to the atmosphere via opening 94 in wall 96 and apertures 110 in cover 108. When sufficient internal pressure has been relieved, spring 120 biases have head 116 back to its closed position. Thus, pressure relief valve 90 is operable as a one-way valve to vent high pressure from fuel tank 30 if same exceeds a predetermined high pressure. Pressure relief valve 90 will typically have an opening or cracking threshold of as little as 1.0, 1.5, 1.8 or 2.0 psi, or as great as 3.0, 3.5, or 4.0 psi, for example, typically at least 2.5 psi. It is contemplated that vacuum relief valve 88 will operate relatively frequently to allow atmospheric air into fuel tank 30, while the operation of pressure relief valve 90 to vent fuel vapors to the atmosphere will be a very rare event and will not contribute to significant evaporative emissions.

Evaporative emissions control system 40 may additionally include a fuel flow blocking or inhibiting member, which may be a valve or a fuel pump, as described below, which blocks fuel flow from fuel tank 30 to fuel bowl 58 of carburetor 42 during engine shutdown. For the reasons described below, the fuel flow blocking member has an opening or cracking threshold which is greater than that of pressure relief valve 90.

Referring to Fig. 4, according to a first embodiment, the fuel flow blocking member may be a valve 130 in fuel line 80 between fuel tank 30 and fuel bowl 58 of carburetor 42. Valve 130 includes a valve housing 132 having a fuel passage 134 with fuel inlet 136 and fuel outlet 138, and valve chamber 140 with vacuum inlet 142 and atmospheric vent 144. A valve member or spool 146 is slidably disposed within valve chamber 140, and includes an annular groove 148 therearound. A spring 150 is disposed under compression within valve chamber 140 between valve member 146 and housing 132 and, as described below, normally biases valve member 146 to a closed position. A pair of O-ring seals 152 are provided within valve chamber 140 about valve member 146 to seal valve chamber 140 from fuel passage 134. A vacuum line 154 connects vacuum inlet 142 to a source of vacuum generated within engine 28 when same is running, such as to a fitting 156 of air filter 49, shown in Fig. 2, which is disposed in fluid communication with throat 46 of carburetor 42. Other suitable sources of vacuum may include throat 46 of carburetor 42, the intake manifold 52 of engine 28, or the crankcase of engine 28.

Normally, when engine 28 is not running, spring 150 biases valve member 146 to a first or closed position as shown in Fig. 4, wherein groove 148 of valve member 146 is not aligned with fuel passage 134 and the flow of fuel through fuel passage 134 from inlet 136 to outlet 138, and thus from fuel tank 30 to fuel bowl 58 of carburetor 42 through fuel line 80, is blocked. Upon running of engine 28, vacuum is communicated via vacuum line 154 to valve chamber 140, which overcomes the bias of spring 150 to shift valve member 146 to a position wherein groove 148 of valve member 146 is at least partially aligned with fuel passage 134, and flow of fuel through fuel passage 134 from inlet 136 to outlet 138, and thus from fuel tank 30 to fuel bowl 58 of carburetor 42 through fuel line 80, is allowed.

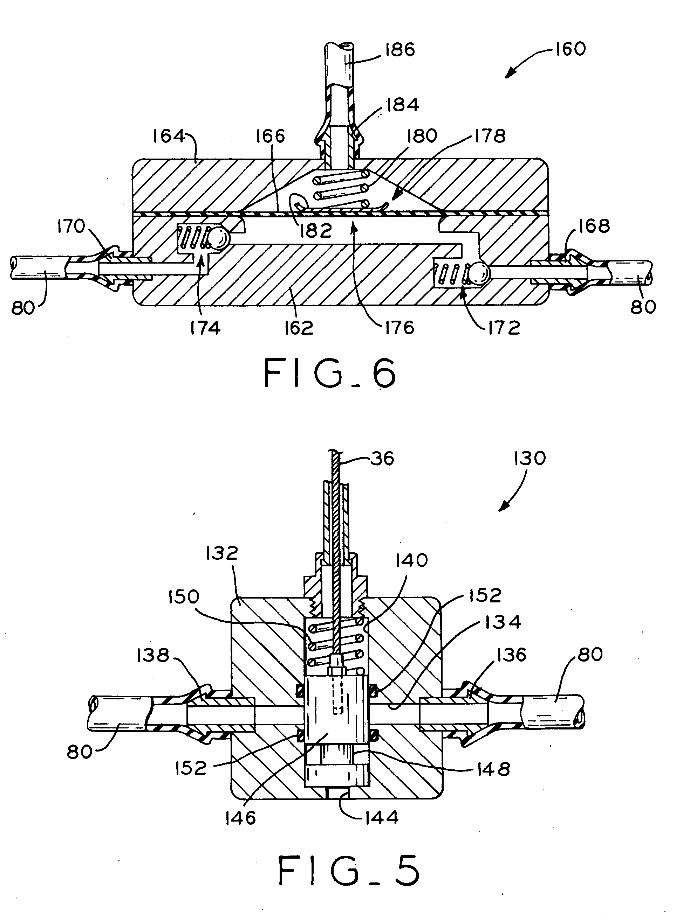

Alternatively, as shown in Fig. 5, valve 130 may be actuated mechanically by bail assembly 34 of lawnmower 20, for example, by connection of cable 36 of bail assembly 34 to valve member 146 such that, when bail assembly 34 is actuated by an operator when engine 28 is started, valve member 146 is translated against the bias of spring 150 to its open position and, when bail assembly 34 is release contemporaneously with engine shutdown, valve member 146 is biased by spring 150 to its closed position.

Thus, valve 130 is operable responsive to a vacuum signal within carburetor 42 or to mechanical actuation to open fuel line 80 during running of engine 28 to allow the supply of fuel from fuel tank 30 to fuel bowl 58 of carburetor 42, as metered by float valve 63 of carburetor 42. When engine 28 is shutdown, valve 130 closes. Valve 130 has an opening or cracking threshold greater than the opening or cracking threshold of pressure relief valve 90 of fuel tank cap 32. In this manner, valve 130 prevents high pressures within fuel tank 30, which may accumulate prior to cracking of pressure relief valve 90, from forcing liquid fuel from fuel tank 30 through inlet valve 63 of carburetor 42 and flooding fuel bowl 58 and/or throat 46 of carburetor 42. Thus, because the opening or cracking threshold of valve 130 is greater than the opening or cracking threshold of pressure relief valve 90, when high pressures exist within fuel tank 30, pressure relief valve 90 will open before valve 130 to vent such pressure to the atmosphere.

Referring to Fig. 6, according to a second embodiment, the fuel flow blocking member may be a fuel pump 160 in fuel line 80 between fuel tank 30 and fuel bowl 58 of carburetor 42. Fuel pump 160 includes a housing defined by first and second housing members 162 and 164 which capture diaphragm 166 therebetween. First housing member 162 includes fuel inlet 168 and fuel outlet 170, and a pair of ball-and-spring check valves 172 and 174 disposed adjacent fuel inlet 168 and fuel outlet 170, respectively. Diaphragm 166 divides the interior of fuel pump 160 into fuel chamber 176 and pressure chamber 178.
Spring 180 is disposed under compression within pressure chamber 178 between second housing 164 and plate 182 in abutment with diaphragm 166. Pressure inlet 184 is in communication with pressure chamber 178, and pressure line 186 communicates pressure inlet 184 and pressure chamber 178 with the crankcase of engine 28. The manner by which the piston of engine 28 generates positive and negative pressure fluctuations, or pulses, with the crankcase of engine 28 is known, and is discussed in detail in U.S. Patent No. 6,915,772, assigned to the assignee of the present invention, the disclosure of which is incorporated herein by reference.

When engine 28 is running, positive and negative pressure pulses from the crankcase of engine 28 fluctuate diaphragm 166 back and forth. When a negative pressure pulse is communicated to pressure chamber 178, diaphragm 166 is biased against spring 182 to enlarge the volume of fuel chamber 176, thereby opening check valve 172 to draw fuel into fuel chamber 176 through fuel inlet 168 from fuel tank 30. When a positive pressure pulse is communicated to pressure chamber 178, diaphragm 166 is biased with spring 182 to constrict the volume of fuel chamber 176, thereby opening check valve 174 to force fuel out of fuel chamber 176 through fuel outlet 170 to fuel bowl 58 of carburetor 42. Thus, fuel pump 160 is operable responsive to pressure pulses in the crankcase of engine 28 to pump fuel from fuel tank 30 to fuel bowl 58 of carburetor 42, as metered by float valve 63 of carburetor 42. When engine 28 is shutdown, fuel pump 160 is deactivated.

Check valves 172 and 174 together have a second opening or cracking threshold which is greater than the opening or cracking threshold of pressure relief valve 90 of fuel tank cap 32. In this manner, similar to valve 130, when engine 28 is not running, fuel pump 160 prevents high pressures within fuel tank 30, which may accumulate prior to cracking of pressure relief valve 90, from forcing liquid fuel from fuel tank 30 through float valve 63 of carburetor 42 and flooding fuel bowl 58 and/or throat 46 of carburetor 42. Thus, because the opening or cracking threshold of check valve 172 of fuel pump 160 is greater than the opening or cracking threshold of pressure relief valve 90, pressure relief valve 90 will open before check valve 172 of fuel pump 160 when high pressure exists within fuel tank 30 to vent such pressure to the atmosphere. Also, fuel pump 160 provides a positive forced flow of fuel from fuel tank 30 to fuel bowl 58 of carburetor 42, thereby aiding vacuum relief valve 88 in overcoming potential vapor lock within fuel tank 30.

Although the fuel flow blocking member may be a valve, such as valve 130, or a pump, such as pump 160, the fuel flow blocking member may also be fuel inlet valve 63 of carburetor 42, so long as fuel inlet valve 63 is configured to have a cracking threshold higher than that of pressure relief valve 90 of fuel tank cap 32 to prevent flooding of carburetor 42 if fuel vapor pressures build within fuel tank 30. Also, although the fuel flow blocking members described herein have cracking thresholds higher than that of pressure relief valve 90, it is contemplated that in normal use of the engines including the evaporative emissions control systems described herein, the fuel flow blocking members will not need to be used so long as pressure relief valve 90 functions properly.

As discussed above, the opening or cracking threshold of the fuel flow blocking member is greater than that of pressure relief valve 90 to prevent flooding of carburetor 42. Typically, the opening or cracking threshold of the fuel flow blocking member will be at least 0.5, 0.75, 1.0, 2.0, or 2.5 psi greater than that of pressure relief valve 90.

In the embodiment of Fig. 2B, fuel is pumped by a suitable fuel pump, such as fuel pump 160, from fuel tank 30 to fuel injector 43 via supply line 45 and excess fuel is returned to fuel tank via return line 47. In addition to a fuel pump, supply line 45 may optionally also include a fuel flow blocking member such as valve 130, which operates as described above.

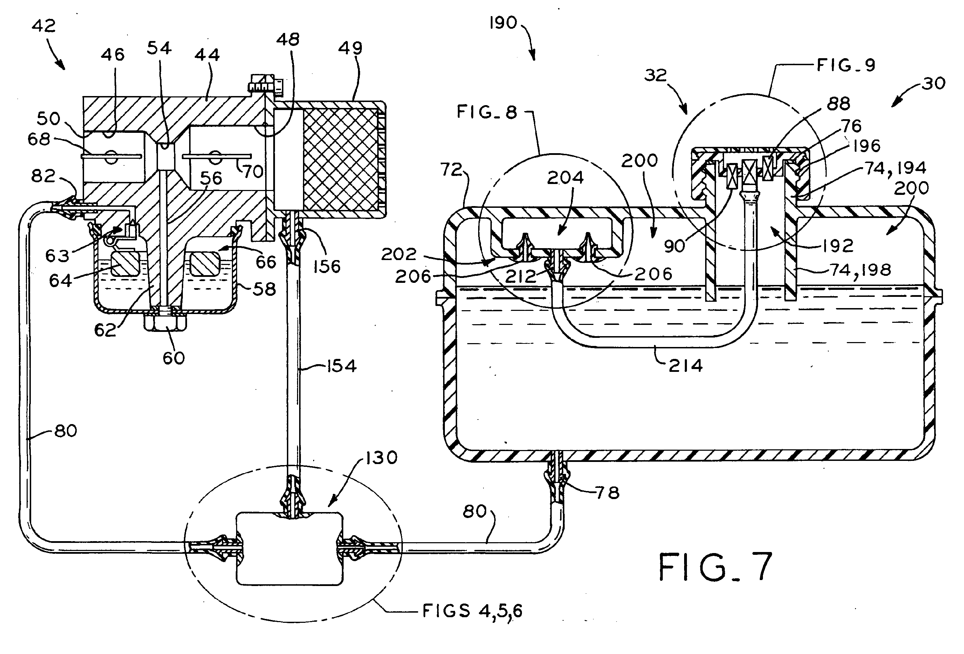

An evaporative emissions control system in accordance with another embodiment is shown in Figs. 7-9. Evaporative emissions control system 190 of Figs. 7-9 includes many features identical to evaporative emissions control system 40 discussed above, and identical reference numerals have been used to identify identical or substantially identical components therebetween. Additionally, evaporative emissions control system 190, except as described below, operates in the same manner as evaporative emissions control system 40. Specifically, in evaporative emissions control system 190, vacuum relief valve 88, pressure relief valve 90, and the fuel flow blocking member operate as described above.

Referring to Fig. 7, filler neck 74 of fuel tank 30 defines a fuel fill passage 192 therethrough, and includes first portion 194 extending externally of fuel tank 30 and having threads 196, and second portion 198 extending internally within fuel tank 30. Second portion 198 of filler neck 74 projects inwardly into fuel tank 30 a distance sufficient that, when the level of liquid fuel in fuel tank 30 rises to the lower end of second portion 198 of filler neck 74, a vapor dome or space 200 is formed within the upper portion of fuel tank 30 which is isolated from fuel fill passage 192 of filler neck 74. Thence, any further fuel which is filled into fuel tank 30 through fuel fill passage 192 of filler neck 74 will rapidly fill up fuel fill passage 192 to indicate to an operator that fuel tank 30 is full.

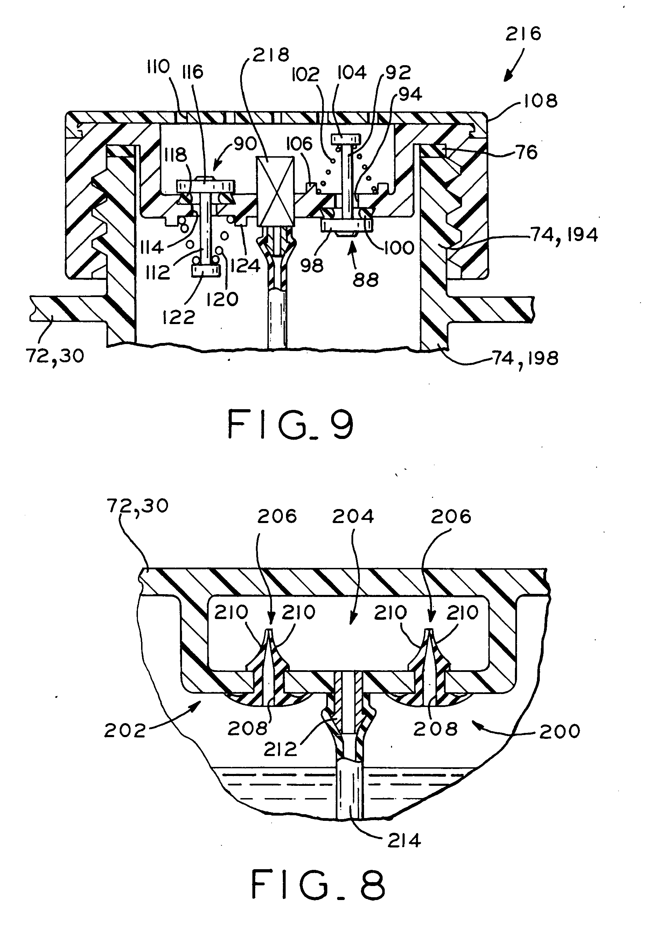

Referring to Fig. 8, vent housing 202 is secured to fuel tank body 72 and positioned within vapor dome 200 or alternatively, may be formed integrally with the upper wall of fuel tank body 72. Referring to Fig. 8, vapor housing 202 generally includes a wall defining vapor space 204 therewithin, and also includes one or more one-way valves 206 which may be, for example, "duck bill"-type valves which include a central passage 208 and a pair of flaps 210. Flaps 210 cooperate with one another such that fuel vapors may pass through central passage 208 and flaps 210 into vapor space 204, biasing flaps 210 apart from one another, with flaps 210 contacting one another to prevent passage of fuel vapors therethrough from vapor space 204 back into vapor dome 200. Vapor housing 202 additionally includes a fitting 212 to which one end of vent conduit 214 is connected.

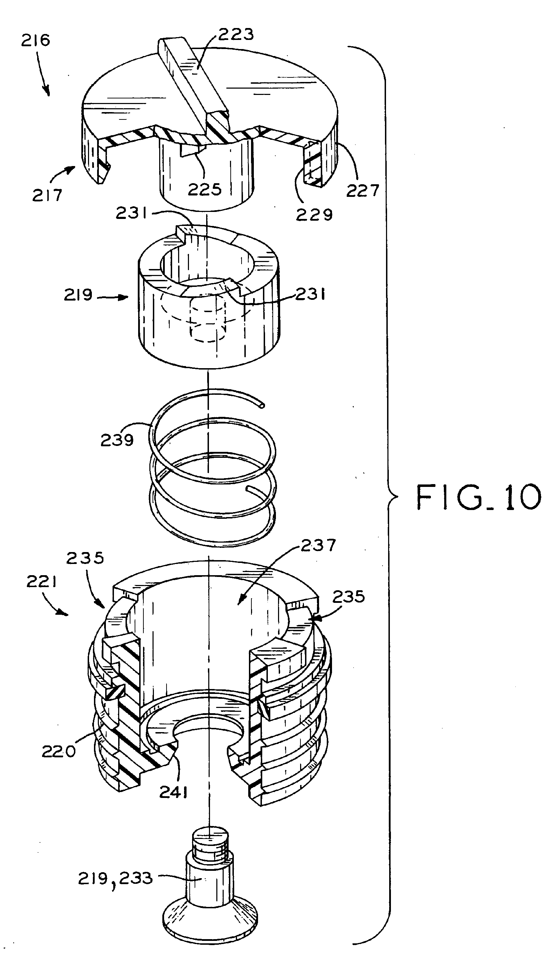

Referring to Fig. 9, fuel tank cap 216 includes vacuum relief valve 88 and pressure relief valve 90 as described above, and additionally includes a fuel vapor vent valve 218, which is schematically shown in Fig. 9, with one embodiment thereof illustrated in more detail in Fig. 10. As discussed in detail below, fuel tank cap 216 and vapor vent valve 218 include a cam mechanism that is operable upon initial rotation of fuel tank cap 216 by an operator to open fuel vapor vent valve 218 and vent vapors from fuel tank 30 to the atmosphere prior to rotation of the threads 220 of fuel tank cap 216. Further rotation of fuel tank cap 216 rotates threads 220 of fuel tank cap 216 with respect to threads 196 of filler neck 74 such that fuel tank cap 216 may be disengaged from filler neck 74. When fuel tank cap 216 is reattached to filler neck 74, threads 220 of fuel tank cap 216 engage threads 196 of filler neck 74 and fuel vapor vent valve 218 closes.

In particular, in one embodiment shown in Fig. 10, fuel tank cap 216 includes cap portion 217, valve portion 219, and base portion 221. Cap portion 217 includes handle 223 or alternatively, a series of ridges (not shown) around its periphery for grasping by an operator, as well as a pair of first ramp cams 225 (only one is visible in Fig. 10) depending from its lower surface, and a skirt portion 227 having a pair of drive members 229 (only one is visible in Fig. 10). Valve portion 219 includes an upper surface including a pair of second ramp cams 231, and a valve stem 233 is secured to valve portion, such as via threads, as shown. Base portion 221 generally includes a pair of arcuate relief areas 235 in which drive members 229 of cap portion 217 are received, as well as a central passage 237 having a lower end in fluid communication with the interior of a fuel tank, and an outer surface including threads 220. Valve stem 233 is normally biased by a spring 239, captured between valve portion 219 and base portion 221, into engagement with valve seat 241 of base portion 221. Threads 220 may be interior threads, as shown in Fig. 7, or may be exterior_threads, as shown in Fig. 10.

In operation, to remove fuel tank cap 216 from fuel tank 30, initial rotation of cap portion 217 by an operator in a counterclockwise direction rotationally engages first cam ramps 225 with second cam ramps 231 of valve portion 219, thereby translating valve portion 219 and valve stem 233 downwardly against the bias of spring 239 to unseat valve stem 233 from valve seat 241 and open central passage 237 to allow fuel vapors within the interior of fuel tank 30 to vent outwardly to the atmosphere through fuel tank cap 216. Further rotation of cap portion 217 in a counterclockwise direction rotates drive members 229 within relief areas 235 of base portion 221 until drive members 229 engage the ends of relief areas 235, thereby causing base portion 221 to rotate along with cap portion 217 to in turn rotate threads 220 of fuel tank cap 216 to disengage fuel tank cap 216 from filler neck 74.

When fuel tank cap 216 is reattached to filler neck 74, initial rotation of cap portion 219 by an operator in a clockwise direction causes drive members 229 to engage the opposite ends of relief areas 235 to rotate threads 220 of fuel tank cap 216 to engage fuel tank cap 216 with filler neck 74, and first cam ramps 225 disengage second cam ramps 231 such that spring 239 normally biases valve stem 233 into engagement with valve seat 241, preventing escape of fuel vapors from the interior of fuel tank 30 to the atmosphere through fuel tank cap 216.

Referring to Fig. 7, a connecting passage is provided between vapor housing 202 and fuel fill passage 192, shown herein as vent conduit 214 includes one end connected to fitting 212 of vapor housing 202, and its opposite end is connected to fuel vapor vent valve 218 of fuel tank cap 216 to fluidly communicate vent housing 202 to fuel vapor vent valve 218. Additionally, vent conduit 214 acts as a tether to connect fuel tank cap 216 to fuel tank 30 such that, when fuel tank cap 216 is disengaged from filler neck 74, fuel tank cap 216 is retained to fuel tank 30 and cannot become lost.

In operation, when fuel tank 30 is full, as shown in Fig. 7 and described above, vapor pressure may build within vapor dome 200 and fuel fill passage 192. When a user opens fuel tank cap 216, initial rotation of fuel tank cap 216 first opens vapor vent valve 218 to vent fuel vapors from vapor dome 200 to the atmosphere through vent housing 202, vent conduit 214, and vapor vent valve 218. In this manner, the vapor pressure within vapor dome 200 is released while the vapor pressure within fuel fill passage 192 remains. Thus, as fuel tank cap 216 is thereafter disengaged from filler neck 74, the vapor pressure within fuel fill passage 192 acts to hold liquid fuel within fuel tank 30 to preventing loss of liquid fuel from fuel tank 30 upon sufficient loosening or removal of fuel tank cap 30 from filler neck 74.

In another embodiment, vent conduit 214 is not connected to vapor vent valve 218 of fuel tank cap 216, but rather is in fluid communication with fuel fill passage 192 such as being secured to the side of filler neck 74 or being connected in a suitable manner to the underside of fuel tank cap 216. In operation, initial rotation of fuel tank cap 216 by an operator opens vapor vent valve 218 to vent vapor pressure concurrently from vapor dome 200 via vapor housing 202 and vent conduit 214, and from fuel fill passage 192 prior to disengagement of fuel tank cap 216 from filler neck 74, thereby venting fuel vapor pressure from fuel tank 30 prior to disengagement fuel tank cap 216 from filler neck 74 to aid in holding liquid fuel within, or preventing loss of liquid fuel from, fuel tank 30 when the fuel tank cap 216 is removed.
While this invention has been described as having a preferred design, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. An internal combustion engine (28), including a fuel supply device (42, 43) including an intake passage (46), a fuel tank (30) including a fuel tank body (72), a filler neck (74), and a fuel tank cap (32) sealingly attached to said filler neck, an internal pressure relief valve (90) having a first cracking threshold, and a fuel line (80) fluidly communicating said fuel tank and said fuel supply device, **characterized in that** said fuel line includes a fuel flow blocking member (130, 160, 63) between said fuel tank and said fuel supply device, said fuel flow blocking member movable between a first, open position during running of said engine and a second, closed position when said engine is not running, said fuel flow blocking member having, in said second, closed position, a second cracking threshold greater than said first cracking threshold of said internal pressure relief valve.

2. The engine (28) of Claim 1, **characterized in that** the fuel supply device (42, 43) is a carburetor (42), and the fuel flow blocking member (130, 160, 63) is a fuel inlet valve (63) of said carburetor.

3. The engine (28) of Claim 2, **characterized in that** said carburetor (42) includes a fuel bowl (58), said fuel line (80) fluidly communicating said fuel tank (30) and said carburetor fuel bowl, and said fuel inlet valve (63) operates responsive to a float (64) disposed within said fuel bowl.

4. The engine (28) of Claim 1, **characterized in that** said fuel flow blocking member (130, 160, 63) is a valve (130), said valve movable between said first, open position and said second, closed position responsive to pressure changes within said engine.

5. The engine (28) of Claim 4, **characterized in that** said valve (130) is in communication with an intake system of said engine via a vacuum line (154).

6. The engine (28) of Claim 1, **characterized in that** said fuel flow blocking member (130, 160, 63) is a valve (130), said valve movable between said first, open position and said second, closed position responsive to mechanical actuation by an operator.

7. The engine (28) of Claim 6, in combination with an implement (20), **characterized in that** said valve (130) is mechanically connected to a bail assembly (34) of said implement.

8. The engine (28) of Claim 1, **characterized in that** said fuel flow blocking member (130, 160, 63) is a fuel pump (160) operable during running of said engine to pump fuel from said fuel tank (30) to said carburetor (42), and not operable when said engine is not running to block fuel flow from said fuel tank to said carburetor.

9. The engine (28) of Claim 1, **characterized in that** said internal pressure relief valve (90) is formed as a part of said fuel tank cap (32).

10. The engine (28) of Claim 1, **characterized in that** said fuel tank (30) further comprises a vacuum relief valve (88).

11. The engine (28) of Claim 1, **characterized in that** said fuel supply device (42, 43) is a fuel injector (43).

12. An internal combustion engine (28), including a fuel tank (30) including a fuel tank body (72), a filler neck (74) having a first portion (194) external of said fuel tank and a second portion (198) internal to said fuel tank with a fuel fill passage (192) defined through said first and second portions, said second portion projecting into said fuel tank volume to define a vapor dome (200) in an upper portion of said fuel tank, and a fuel tank cap (216) securable to said fist portion of said filler neck; **characterized by** a connecting passage fluidly connecting said vapor dome and said fuel fill passage, wherein when said fuel tank contains a liquid fuel level proximate said second portion of said filler neck, opening said fuel tank cap vents fuel vapors concurrently from said fuel fill passage and from said vapor dome through said connecting passage.

13. The engine (28) of Claim 12, **characterized in that** said connecting passage is a vent conduit (214) connected between said vapor dome (200) and said fuel fill passage (192), said vent conduit fluidly communicating said vapor dome and said fuel fill passage and tethering said fuel tank cap (216) to said fuel tank (30).

14. The engine (28) of Claim 12, **characterized in that** said fuel tank cap (216) includes a vent valve (218) openable prior to disengagement of said fuel tank cap from said filler neck (74).

15. The engine (28) of Claim 14, **characterized in that** said connecting passage is a vent conduit (214) connected between said vapor dome (200) and said vent valve (218) of said fuel tank cap (216), said vent conduit fluidly communicating said vapor dome and said vent valve and tethering said fuel tank cap to said fuel tank (30).

16. The engine (28) of Claim 12, **characterized in that** said vapor dome (200) further includes a vapor housing (202) to which said connecting passage is connected, said vapor housing including at least one valve (206), said valve permitting passage of fuel vapors from said vapor dome into said vapor housing but blocking passage of fuel vapors from said vapor housing to said vapor dome.
